# EUROPEAN PATENT SPECIFICATION

(11) **EP 3 643 691 B1**
(45) Date of publication and mention of the grant of the patent: **21.07.2021**
(21) Application number: 18202313.5
(22) Date of filing: 24.10.2018
(51) Int. Cl.: C03C 3/097, C03C 4/00, C03C 13/04, C03C 13/00

(54) **BIODEGRADABLE, BIOACTIVE AND BIOCOMPATIBLE GLASS COMPOSITION**
BIOLOGISCH ABBAUBARE, BIOAKTIVE UND BIOKOMPATIBLE GLASZUSAMMENSETZUNG
COMPOSITION DE VERRE BIODÉGRADABLE, BIOACTIF ET BIOCOMPATIBLE

(43) Date of publication of application: 29.04.2020
(73) Proprietor: Arctic Biomaterials Oy, 33520 Tampere (FI)
(72) Inventor: Lehtonen, Timo, 21120 Raisio (FI); Ellä, Ville, 33520 Tampere (FI)
(74) Representative: Kolster Oy Ab

(56) References cited:
- EP-A- 0 412 878
- WO-A1-2016/035088
- CN-A- 106 554 609
- FR-A1- 2 781 788

## Description

### FIELD OF THE INVENTION

The invention relates to a biodegradable, bioactive and biocompatible glass composition, its use in the production of continuous glass fibre, and use of the continuous glass fibre in medical and non-medical applications.

### BACKGROUND OF THE INVENTION

Glass fibres are among the most versatile industrial materials known today. They are readily produced from mineral raw materials, which are readily available.

Continuous glass fibres are manufactured from molten glass. Glass melts are made by fusing (co-melting) silica with other metal oxides to give a specified composition. Glass is an amorphous solid that is obtained by cooling a melt sufficiently fast to avoid crystallization (devitrification).

In fiberization of glass, a viscous molten glass liquid is drawn (extruded) through tiny holes at the base of the bushing to form hair-like thin filaments, i.e. fibres. The temperature at which glass melt has a log 3 viscosity (poise or dPas), has been considered generally as fibre forming, i.e. fiberization, temperature T_{F}. To enable continuous manufacturing of continuous glass fibres, crystallization of the molten glass during fiberization must be prohibited. Therefore, the fiberization temperature is required to be sufficiently higher than liquidus temperature T_{L}. The difference between fibre forming and liquidus temperature is the working window ΔT= T_{F} - T_{L} in fiberization process, which is required to be large enough to enable optimum fibre formation depending on the fibre diameter.

Nearly all continuous textile glass fibres (also known as continuous strand fibre glass, or simply fibre glass excluding glass wools) are made industrially by a direct melt draw process, but the marble melt (re-melt) process can be used to form special-purpose glass fibres, for example, high-strength fibres.

Various bioactive and bioresorbable silica based glass compositions are known in the field. As described by literature, melt-derived bioactive glasses are characterized by a SiO₂ content of less than 60 wt-%, a high Na₂O and CaO content, and a high CaO:P₂O₅ ratio. They are able to bond to bone and soft tissue, and they may be used for stimulating tissue or bone growth in a mammalian body. Bioactive glass also typically guides the formation of new tissue, which grows within said glass. When bioactive glasses come into contact with a physiological environment, a layer of silica gel is formed on the surface of the glass. Following this reaction, calcium phosphate is deposited to this layer and finally crystallized to a hydroxyl-carbonate apatite. Due to this hydroxyl-carbonate apatite (HCA) layer the resorption of bioactive glasses is slowed down when inserted into mammalian bodies.

EP 2243749 A1 discloses biocompatible and resorbable melt derived fibre glass and its use in medical devices. The fibre glass has a composition: SiO₂ 60-70 wt-%, Na₂O 5-20 wt-%, CaO 5-25 wt-%, MgO 0-10 wt-%, P₂O₅ 0.5-5 wt-%, B₂O₃ 0-15 wt-%, Al₂O₃ 0-5 wt-%, Li₂O 0-1 wt-%, and less than 0.5 wt-% potassium. CN 106 554 609 A discloses a composite material comprising a silica-based fibre glass and a biodegradable polymer.

### BRIEF DESCRIPTION OF THE DRAWINGS

Figure 1 shows the effect of varied amounts of potassium oxide, based on sodium oxide amount, on the temperature at Log (viscosity, dPas) 2.5.
Figure 2 shows the degradation of glass fiber of the invention and the formation of a calcium phosphate layer around the glass fibre after 16 weeks' holding time in a simulated body fluid.

### BRIEF DESCRIPTION OF THE INVENTION

It was surprisingly found in the present invention that a small amount of potassium, i.e. >0.5 wt-% to 4 wt-%, in a biodegradable glass composition provides good fiberization properties with a large working window.

Further, it was surprisingly found that glass fibre manufactured from the glass composition of the invention provides glass fibre reinforced articles with bioactivity, i.e. formation silica rich gel and calcium phosphate layer.

In an aspect, the present invention provides a biodegradable, bioactive and biocompatible glass composition comprising:

| | |
|---|---|
| SiO₂ | 65 - 75 wt-% |
| Na₂O | 12 - 17 wt-% |
| CaO | 8 - 11 wt-% |
| MgO | 3 - 7 wt-% |
| P₂O₅ | 0.5 - 2.5 wt-% |
| B₂O₃ | 1 - 4 wt-% |
| K₂O | >0.5 wt-% - 4 wt-% |
| SrO | 0 - 4 wt-%, and |

at most 0.3 wt-% in total of Al₂O₃ and Fe₂O₃.

In another aspect, the invention provides biodegradable, bioactive and biocompatible glass fibre, comprising the glass composition of the invention.

In a further aspect, the invention provides use of the biodegradable, bioactive and biocompatible glass fibre of the invention in the manufacture of articles suitable for use in medical and non-medical applications.

In a still further aspect, the invention provides an article comprising the glass fibre of the invention.

An advantage of the present invention is that the glass composition provides an improved melt-derived fiberization process for forming continuous glass fibre due to its beneficial crystallization properties, melt viscosity properties and melt strength.

A further advantage of the present invention is that the glass fibre manufactured of the glass composition shows similar or improved strength properties compared to typical chemically resistant glass fibres with the same fibre diameter.

A further advantage of the present invention is the usability of the glass fibres in the medical field, and in the technical field in producing composites.

### DEFINITIONS

In the present invention,
The term "biodegradable" means that the material is degraded in physiological or biological environment, i.e. decomposed by bioerosion and/or bioresorption. The material decomposed by bioerosion means that the material disintegrates, i.e. erodes mechanically and chemically via biological processes that solubilize the material and enable absorption into the surrounding biological aqueous environment. The material decomposed by bioresorption means that the material is disintegrated, i.e., decomposed upon prolonged implantation when inserted into a mammalian body and coming into contact with a physiological environment. The term "biodegradable material" thus also encompasses bioerodible and bioresorbable materials.

The term "bioactive" means that the material elicits or modulates biological activity. Bioactive material is often a surface-active material that is able to chemically bond with the mammalian tissues through forming a silica rich gel and calcium phosphate layer, i.e., hydroxyl-carbonate apatite layer, on its surface when exposed to appropriate in vitro environments (ASTM F1538 - 03 Standard Specification for Glass and Glass Ceramic Biomaterials for Implantation) and in contact with a physiological environment, which activates cells or cell growth during its decomposition process.

The term "biocompatible" means that the material used in a medical device is able perform safely and adequately by causing an appropriate host response in a specific location.

The term "fiberization temperature T_{F}" means glass (melt) temperature at which viscosity (poise or dPas) of the glass melt is Log (viscosity) = 3. General instructions for glass viscosity measurements are given in ISO 7884-1.

The term "liquidus temperature T_{L}" means glass (melt) temperature below which solid crystals will form and above crystals do not exist. Above this temperature melt is homogenous. Standard Practices for Measurement of Liquidus Temperature of Glass by the Gradient Furnace Method is given in ASTM C829 - 81(2015).

The term "working window ΔT" means the temperature difference between fibre forming and liquidus temperature ΔT= T_{F} - T_{L}.

The term "resorption" means decomposition of a material because of dissolution.

### DETAILED DESCRIPTION OF THE INVENTION

In an aspect, the present invention provides a biodegradable, bioactive and biocompatible glass composition comprising:

| | |
|---|---|
| SiO₂ | 65 - 75 wt-% |
| Na₂O | 12 - 17 wt-% |
| CaO | 8 - 11 wt-% |
| MgO | 3 - 7 wt-% |
| P₂O₅ | 0.5 - 2.5 wt-% |
| B₂O₃ | 1 - 4 wt-% |
| K₂O | >0.5 wt-% - 4 wt-% |
| SrO | 0 - 4 wt-%, and |

at most 0.3 wt-% in total of Al₂O₃ and Fe₂O₃.

In an embodiment, the glass composition comprises:

| | |
|---|---|
| SiO₂ | 65 - 75 wt-% |
| Na₂O | 12 - 17 wt-% |
| CaO | 8 - 11 wt-% |
| MgO | 4 - 6 wt-% |
| P₂O₅ | 0.5 - 2.5 wt-% |
| B₂O₃ | 1 - 4 wt-% |
| K₂O | >0.5 wt-% - 2 wt-%, |

| | |
|---|---|
| SrO | 0 - 2 wt-%, and |

at most 0.3 wt-% in total of Al₂O₃ and Fe₂O₃.

In another embodiment, the glass composition comprises:

| | |
|---|---|
| SiO₂ | 66 - 70 wt-% |
| Na₂O | 12 - 15 wt-1% |
| CaO | 8 - 10 wt-% |
| MgO | 5 - 6 wt-% |
| P₂O₅ | 1 - 2 wt-% |
| B₂O₃ | 2 - 3 wt-% |
| K₂O | >0.5 wt-% -1 wt-%, and |
| SrO | 0 - 1 wt-%, and |

at most 0.3 wt-% in total of Al₂O₃ and Fe₂O₃.

In an embodiment, the glass composition of the invention comprises less than 0.1 wt-% in total of Al₂O₃ and Fe₂O₃. In a preferred embodiment, the glass composition of the invention is completed free of Al₂O₃ and Fe₂O₃ even as impurities.

Without wishing to be bound by theory, it is believed that aluminum and iron hinder the resorption and degradation of glass. Namely, during degradation aluminum and iron accumulate in the hydrated silica-rich layer present around the glass fibre, creating new chemical bonds with silicon resulting in a more stable silica-rich layer or gel enriched with Al and Fe. Accumulation of Al and Fe ions on the silica rich layer prevents the ions from leaching out and thus hinders further resorption and erosion of the glass fibre.

In an embodiment, the glass composition of the invention is free from strontium. In another embodiment, the glass composition comprises up to 4 wt-% of SrO. In a further embodiment, the glass composition comprises up to 2 wt-% of SrO. The glass composition comprising strontium enhances biological response of the composition, since strontium ions upregulate osteoblasts and downregulate os-teoclasts, i.e. improve new bone formation around the implanted medical device. As strontium and calcium are divalent cations, partial substitution of strontium for calcium can take place in the glass.

By varying the amounts of silica and other components comprising Na₂O, K₂O CaO, MgO, P₂O₅, B₂O₃, and SrO in a glass composition, resorption and erosion rate of glass fibres may be controlled and tailored for various end applications.

The glass composition of the present invention has a large working window ΔT (ΔT = T_{F} - T_{L}) of more than 150°C. Liquidus temperature T_{L} is the highest temperature at which the glass composition remains in melted state and homogenous without crystal formation. Fibre forming temperature T_{F}, i.e. fiberization temperature, is the temperature at which the glass melt has log 3.0 viscosity (poise or dPas). Thus, ΔT is the temperature difference between the temperature at log (viscosity) 3.0 and the liquidus temperature of the glass composition.

The large working window allows optimum fiberization, i.e. fibre forming of the glass composition whereby fibres can be drawn without crystallization of the glass composition impeding the fiberization. Optimum fibre formation is achieved when glass melt has a viscosity ranging from log (viscosity) 2.5 to 3.0.

It has been surprisingly found the glass composition comprising >0.5 - 4 wt-% of potassium oxide facilitates fiberization of the glass composition providing biodegradable, bioactive and biocompatible glass fibres. Potassium prevents devitrification of the glass composition lowering the liquidus temperature of the composition. Since potassium also raises the fibre forming temperature, widening of the working window is advantageously achieved.

In an embodiment, the working window ΔT of the glass composition is > 200°C. In another embodiment, the working window ΔT of the glass composition is > 300°C.

In an embodiment, the fiberization viscosity (Log (viscosity) 3.0) of the glass composition is higher than liquidus temperature of the glass composition.

In another aspect, the invention provides biodegradable, bioactive and biocompatible glass fibre comprising the glass composition of the invention.

Bioactive fibre glasses of the invention start to react immediately when contacted with physiological environment by alkali exchange reactions, i.e. sodium and potassium ions in the glass are replaced by hydrogen ions from the solution. Bioactivity of glass fibres is based on ions leaching out of the glass and forming a silica rich gel and a calcium phosphate layer on the surface of the glass fibre. The calcium phosphate layer enables bone cells to attach and differentiate and form bioactive layer for bone and tissue to attach. Also therefore, it is important to understand the role of aluminum and iron in the glass, during the dissolution of the glass aluminum and iron are accumulating in the surface of the glass and making the glass surface inactive and preventing the ions to be leached out and preventing further resorption and erosion of the glass and bioactive layer formation. Therefore aluminum and iron should be limited only to the impurity amounts in bioresorbable and bioactive glasses.

The glass compositions of the invention can be manufactured into glass fibres according to standard melt processes known in the art. In an embodiment, continuous (strand, direct roving) glass fibres are formed from molten glass composition directly from the furnace (direct melt process). In another embodiment, the molten glass composition is first fed to a machine that forms glass marbles or pellets and then re-melted to form fibres (re-melt or marble melt process).

In both the direct melt and marble melt process, the conversion of molten glass composition into continuous glass fibres can be described as a continuous-filament attenuation process. The molten glass flows through a platinum-rhodium alloy bushing (also called spinnerets) with a large number of fine orifices/nozzles/tips (400 to 8000). The bushing is heated electrically, and the heat is controlled very precisely to maintain a constant glass viscosity. The fine filaments, i.e. fibres, are drawn down and cooled rapidly after exiting the bushing. After the glass flows through the orifices in the bushing, and before multiple strands are caught up on a take-up device, a sizing is applied to the surface of the fibres by passing them over an applicator that continually rotates through the sizing bath to maintain a thin film through which the glass filaments pass.

After applying the sizing, the filaments are gathered into a strand before approaching the take-up device. If small bundles of filaments (split strands) are needed, multiple gathering devices (often called shoes) are used.

The attenuation rate, and therefore the final filament diameter, is controlled by the take-up device. The take-up device revolves at about 0.5km-3km a minute i.e. faster than the rate of flow from the bushings. The tension pulls out the filaments while still molten, forming strands with a thickness of a fraction of the diameter of the openings in the bushing. In addition to the attenuation rate fibre diameter is also affected by bushing temperature, glass viscosity, and the pressure head over the bushing. The most widely used take-up device is the high speed forming winder, which employs a rotating collet and a traverse mechanism to distribute the strand in a random manner as the forming package grows in diameter. This facilitates strand removal from the package in subsequent processing steps, such as roving, yarn or chopping. The forming packages are dried and transferred to the specific fabrication area for conversion into the finished fibre glass roving, twisted and plied yarn, mat, chopped strand, or other textile product. Preferable process is to produce finished roving or chopped products directly during forming, thus leading to the term direct draw roving or direct chopped strand.

Other textile products are woven roving, which is produced by weaving fibre glass roving's into a fabric form; fibre glass mats, which may be produced as either continuous- or chopped-strand mats; combinations of a mat and woven roving; texturized yarn; and fibre glass fabrics, where fibre glass yarns are converted to fabric form by conventional weaving operations.

In an embodiment, the glass fibre of the invention is a melt derived glass fibre. Melt derived glass fibre means glass fibre manufactured by melting a glass composition in a crucible at 800-1500°C and pulling glass fibres of the molten glass through holes of the crucible, resulting in fibres with a diameter in the range of 5-100 µm.

The glass fibre of the present invention shows improved strength properties when compared for example to chemically resistant C-glass fibre (ASM Handbook, Vol 21: Composites) having the same diameter. In an embodiment, the glass fibre of the present invention has a tensile strength of 1.5 GPa-2.5 GPa. In another embodiment, the tensile strength is in the range of 1.8 GPa-2.2 GPa. In a further embodiment, the tensile strength is in the range of 2.0 GPa-2.2 GPa. The tensile strength was measured according to ISO 11566:1996.

In an embodiment, the glass fibre of the present invention has a modulus of 50-100 GPa. In another embodiment, the modulus is 60-80 GPa. In a further embodiment, the modulus is 65-75 GPa. The modulus was measured according to ISO 11566:1996.

The thickness of the glass fibre of the present invention is 35 µm or less. In an embodiment, the thickness is 1µm-35µm. In another embodiment, the thickness is 5µm-30µm. In a further embodiment, the thickness is 10µm-25µm. In a still further embodiment, the thickness is 10µm-20µm. In an embodiment, the thickness is about 15µm.

The glass fibre of the present invention may be chopped or continuous glass fibre. In an embodiment, the length of chopped glass fibre of the invention is less than 20mm. In an embodiment, the length is 0.5mm-10mm. In another embodiment, the length is 1mm-7mm. In a further embodiment, the length is 3mm-7mm. In a still further embodiment, the length is about 5mm.

In another embodiment, the length of continuous glass fibre of the invention is more than 20 mm. In another embodiment, the length is more than 30 mm. In a further embodiment, the length is more than 40 mm. In a still further embodiment, the glass fibre is fully continuous fibre.

The glass fibre of the invention may be in form for the thermoset or thermoplastic pultrusion form. The glass fibre of the invention can also be organized in non-woven or woven mat form.

The present invention provides a biodegradable, bioactive and biocompatible glass fibre suitable for use in medical applications, such as in medical devices. Further, the present invention provides a biodegradable and compostable glass composition suitable for use in technical applications, such as in disposable and durable goods.

Thus, in a further aspect, the invention provides use of the biodegradable, bioactive and biocompatible glass fibre of the invention in the manufacture of articles suitable for use in medical and non-medical applications.

In an aspect, the invention provides an article comprising the glass fibre of the invention.

The glass fibre of the invention may also be used in manufacturing textile.

The medical device can be any kind of implant used within the body, as well as devices used for supporting tissue or bone healing or regeneration. An implant according to the present context comprises any kind of implant used for surgical musculoskeletal applications such as screws, plates, pins, tacks or nails for the fixation of bone fractures and/or osteotomies to immobilize the bone fragments for healing; suture anchors, tacks, screws, bolts, nails, clamps, stents and other devices for soft tissue-to-bone, soft tissue-into-bone and soft tissue-to-soft tissue fixation; as well as devices used for supporting tissue or bone healing or regeneration; or cervical wedges and lumbar cages and plates and screws for postero-lateral vertebral fusion, interbody fusion and other operations in spinal surgery.

Also, the glass fibre of the invention can be used in medical devices such as canules, catheters and stents. Further, the glass fibre of the invention can be used in fibre reinforced scaffolds for tissue engineering.

Depending on the application and purpose of the medical device material, the medical devices are expected and designed to be biocompatible and exhibit controlled resorption in the mammalian body. The optimal resorption rate is directly proportional to the renewal rate of the tissue in the desired implantation location. In the case of bone tissue, a considerable proportion of the implant is preferably resorbed/decomposed within 12 to 26 weeks depending on the application, in the tissue. In cases where physical support to the healing tissues is desirable, the resorption rate may be several months or even several years.

Durable goods for technical applications mean goods that do not quickly wear out, or more specifically, ones that yield utility over time rather than being completely consumed in one use. Durable goods include, for example, home appliances, furniture, car or transportation parts and accessories, toys, and sport equipment. Durable goods are typically characterized by long periods between successive purchases.

Disposable goods for technical applications, i.e., nondurable goods or soft goods (consumables) are the opposite of durable goods. They may be defined either as goods that are immediately consumed in one use or ones that have a lifespan of less than three years. Disposable goods include, for example, caps and closures, containers, packages, coffee capsules, storage containers, caps, toys, phones, laptops, home electronics, and personal care items.

The amount of glass fibres of the invention in the articles is more than 10 wt-% of the total weight of the article. In an embodiment, the amount is more than 40 wt-%. In another embodiment, the amount is more than 60 wt-%. In a further embodiment, the amount is more than 90 wt-%.

The advantage of the medical devices comprising the glass fibre of the present invention is that they resorb from the body by degradation without giving rise to toxicological effects and create a bioactive surface for the cells to attach and bond to tissue or bone.

The advantage of disposable and durable goods according to present invention is that they can form a high strength composite material together with biodegradable polymer matrix which can compost or degrade in different conditions such as marine, soil, home compost or industrial compost, depending on biodegradation properties of the polymer. The advantage from compostable glass fibre is that it creates non-ecotoxic surface for biofilm formation micro-organism can attach and degrade the polymer.

Another advantage of the medical devices or disposable and durable goods end-products according to the invention is their strength and feasibility of manufacture. An end-product according to the present invention may be manufactured by arranging the glass fibres with a polymer matrix, preferably with a bioresorbable or biodegradable polymer matrix, and using any type of polymer processing equipment, e.g. open or closed batch mixer or kneader, continuous stirring tank reactor or mixer, extruder, injection molding machine, RIM, compression molding machine, tube reactor or other standard melt processing or melt mixing equipment known in the field, producing and/or shaping the arranged fibres with the polymer matrix into an end product having a desired orientation of the continuous fibres and/or chopped/cut fibres and/or woven, non-woven mats/textiles.

A further advantage of the present invention is that the melting temperature of the polymer matrix material is around 30-300°C, and the glass transition temperature of the glass fibres around 450-650°C. Consequently, the glass fibres are not damaged by the temperature of the melted matrix material and a strong fibre reinforced end-product is obtained when the matrix is let to solidify.

The glass fibre of the present invention may be embedded in a continuous polymer matrix to form a composite. The polymer matrix is preferably bioresorbable and/or bioerodible. The following bioresorbable and/or bioerodible polymers, copolymers and terpolymers may be used as a matrix material for the composite: polylactides (PLA), poly-L-lactide (PLLA), poly-DL-lactide (PDLLA), poly-glycolide (PGA); copolymers of glycolide, glycolide/trimethylene carbonate copolymers (PGA/TMC); other copolymers of PLA such as lactide/tetramethylglycolide copolymers, lactide/trimethylene carbonate copolymers, lactide/d-valerolactone copolymers, lactide/ε-caprolactone copolymers, L-lactide/DL-lactide copolymers, glycolide/L-lactide copolymers (PGA/PLLA), polylactide-co-glycolide; terpolymers of PLA such as lactide/glycolide/trimethylene carbonate terpolymers, lactide/glycolide/ε-caprolactone terpolymers, PLA/polyethylene oxide copolymers; polydep-sipeptides; unsymmetrically 3,6-substituted poly-1,4-dioxane-2,5-diones; polyhy-droxyalkanoates such as polyhydroxybutyrates (PHB); PHB/b-hydroxyvalerate copolymers (PHB/PHV); poly-b-hydroxypropionate (PHPA); poly-p-dioxanone (PDS); poly-d-valerolactone-poly-ε-caprolactone, poly(ε-caprolactone-DL-lactide) copolymers; methylmethacrylate-N-vinyl pyrrolidone copolymers; polyesteramides; polyesters of oxalic acid; polydihydropyrans; polyalkyl-2-cyanoacrylates; polyurethanes (PU); polyvinylalcohol (PVA); polypeptides; poly-b-malic acid (PMLA); poly-b-alkanoic acids; polycarbonates; polyorthoesters; polyphosphates; polyamino acids; polyphosphazenes, poly(ester anhydrides); and mixtures thereof; and natural polymers, such as sugars, starch, cellulose and cellulose derivatives, polysaccharides, collagen, chitosan, fibrin, hyaluronic acid, polypeptides and proteins. Mixtures of any of the above-mentioned polymers and their various forms may also be used.

It will be obvious to a person skilled in the art that, as the technology advances, the inventive concept can be implemented in various ways. The invention and its embodiments are not limited to the examples described above but may vary within the scope of the claims.

The following example further illustrates the invention, without limiting the invention thereto.

### Example 1

The effect of potassium oxide of the biodegradable, bioactive and biocompatible glass composition on the viscosity of the composition was simulated by "Glass Viscosity Calculation Based on a Global Statistical Modeling Approach" (Al-exander Fluegel, Glass Technol.: Eur. J. Glass Sci. Technol. A, February 2007, 48 (1), 13-30). Table 1 presents the glass compositions used for the viscosity simulation. Compositions 4, 5, 6 and 7 represent the glass compositions of the invention.

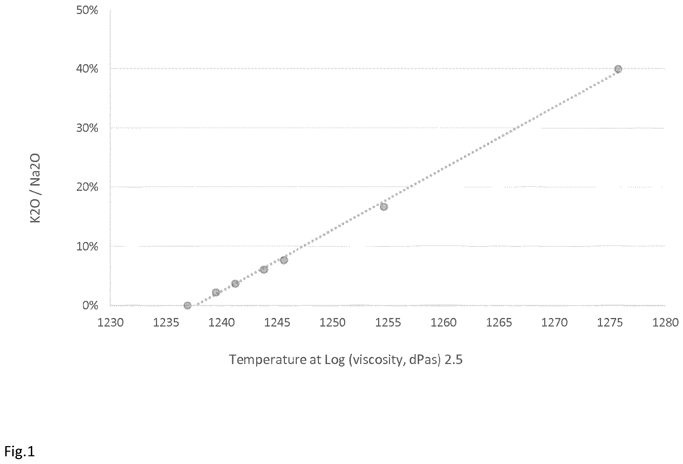

Figure 1 shows that when the amount of potassium oxide in relation to the amount of sodium oxide increases, the melt viscosity increases in linear manner. Simultaneously, the working window of the glass compositions is widened, since the fiberization temperature raises and simultaneously the liquidus temperature lowers as shown in Example 2.

**Table 1**

| Composition | SiO₂ (wt-%) | CaO (wt-%) | MgO (wt-%) | B₂O₃ (wt-%) | P₂O₅ (wt-%) | Na₂O (wt-%) | K₂O (wt-%) | Al₂O₃ (wt-%) |
|---|---|---|---|---|---|---|---|---|
| 1 | 68.0 | 9.0 | 5.5 | 2.1 | 1.1 | 14.0 | 0.0 | 0.3 |
| 2 | 68.0 | 9.0 | 5.5 | 2.1 | 1.1 | 13.7 | 0.3 | 0.3 |
| 3 | 68.0 | 9.0 | 5.5 | 2.1 | 1.1 | 13.5 | 0.5 | 0.3 |
| 4 | 68.0 | 9.0 | 5.5 | 2.1 | 1.1 | 13.2 | 0.8 | 0.3 |
| 5 | 68.0 | 9.0 | 5.5 | 2.1 | 1.1 | 13.0 | 1.0 | 0.3 |
| 6 | 68.0 | 9.0 | 5.5 | 2.1 | 1.1 | 12.0 | 2.0 | 0.3 |
| 7 | 68.0 | 9.0 | 5.5 | 2.1 | 1.1 | 10.0 | 4.0 | 0.3 |

### Example 2

Biodegradable, bioactive and biocompatible glass compositions of the invention were manufactured according to the melt process procedure (compositions 1-3 in Table 2). Two reference compositions 4 and 5 were manufactured similarly. In the melt process procedure, platinum and rhodium melting crucible was heated to 1500±10°C. 1.5 kg in total of metal oxide powders in amounts given in table 2 was added into the crucible in batches within 2h. When the charging was completed, the temperature rose back to about 1500°C. The sample was held at 1500±1°C for 12h. After clarification and homogenization, the glass melt was poured onto a steel mold to obtain bulk glass.

**Table 2**

| Composition | SiO₂ (wt-%) | CaO (wt-%) | MgO (wt-%) | B₂O₃ (wt-%) | P₂O₅ (wt-%) | Na₂O (wt-%) | K₂O (wt-%) | Al₂O₃ and Fe₂O₃ (wt-%) |
|---|---|---|---|---|---|---|---|---|
| 1 | 65.2 | 10.2 | 3.7 | 3.7 | 1.6 | 14.3 | 1.0 | 0.3 |
| 2 | 67.0 | 8.1 | 5.2 | 3.4 | 1.5 | 13.5 | 1.0 | 0.3 |
| 3 | 68.0 | 9.0 | 5.5 | 2.1 | 1.1 | 13.2 | 0.8 | 0.3 |
| 4 | 69.5 | 8.0 | 5.2 | 1.9 | 1.5 | 13.5 | 0.04 | 0.3 |
| 5 | 67.0 | 9.0 | 5.0 | 2.3 | 1.5 | 14.4 | 0.30 | 0.5 |

All glass compositions 1-5 were melted at the high temperature into bulk glass and formed colorless transparent bulk glass after cooling without any crystallization.

Liquidus temperature (T_{L}) of compositions 1-5 of Tale 2 were measured in gradient furnace according to ASTM C829 - 81(2015) "Standard Practices for Measurement of Liquidus Temperature of Glass by the Gradient Furnace Method". The standard is for determining the maximum temperature at which crystallization will form in glass, and a minimum temperature at which glass can be held for extended periods of time without crystal formation and growth. Temperature range for determining of liquidus temperature was 750°C - 1100°C.

Table 3 show liquidus temperatures (T_{L}) of glass compositions 1-5 of Table 2.

**Table 3**

| Composition | T_{L} (°C) | |
|---|---|---|
| 1 | <750 | Crystallization could not be detected |
| 2 | <750 | Crystallization could not be detected |
| 3 | <750 | Crystallization could not be detected |
| 4 | - | Full of crystals even up to 1280°C |
| 5 | 1000 | Initiation of crystal growth started at 1000°C |

Glass compositions 1-3 according to the invention did not show any crystallization (devitrification) in the measured temperature range of 750°C-1100°C and showed fully amorphous behavior, while glass composition 4 was fully crystalline even at 1280°C. Therefore, liquidus temperature could not be determined for composition 4.

Table 3 shows that the increased amount of potassium of the glass composition lowers liquidus temperature of the glass composition.

### Example 3

Glass melt viscosity of glass compositions 1-5 was measured by high temperature rotational Viscometer inserted. The fiberization temperature T_{F} at glass melt viscosity Log (viscosity, dPas) 3 is presented in Table 4. The working window ΔT is then determined as the difference between the fiberization temperature and liquidus temperature (ΔT = T_{F} - T_{L}). Continuous undisturbed manufacture of continuous glass fibres from the compositions was possible in cases where the working window was > 150°C.

**Table 4**

| Composition | T_{F} (°C) | ΔT |
|---|---|---|
| 1 | 1090 | >340 |
| 2 | 1130 | >380 |
| 3 | 1140 | >390 |
| 4 | 1160 | could not be determined |
| 5 | 1120 | 120 |

The glass compositions 1-3 according to the invention have a large working window. Thus, continuous glass fibres can be continuously manufactured by direct melt or re-melt processing methods in industrial-scale. The large working window of the glass composition according to the invention is achieved due to a low liquidus temperature and improved melt viscosity properties. The mixed-alkali (Na₂O-K₂O) effect for the viscosity is shown to be caused not only by alkali-alkali but also by alkali-silica interactions. Alkali-silica interactions cause small, but large enough, additions of alkali oxide to silica in glass to have a relative stronger influence on the viscosity than large additions, where increasing silica amounts are lifting the fiberization temperature together with increased potassium oxide to sodium oxide ratio. Moreover, from melt viscosity measurement same glass composition (table 2, composition 3) according to invention was compared with the simulation data of glass melt viscosity Log (viscosity, dPas) 2.5 (table 1, composition 4.) and result was reasonably close to each other having only the difference of 6 degrees.

### Example 4

Fiber forming properties of the glass compositions 1-3 of the invention were tested by drawing single filament/fiber from single-tip bushing as re-melt process. The bulk glass was manufactured according same procedure as presented in example 2. Then the bulk glass were put into the crucible and melted above fiberization temperatures at 1300°C for 2 hours. After homogenization for 2 hours, the fiber drawing was started. The fibre drawing conditions were adjusted by changing the bushing temperature and fiber collecting winder speed to find stable fiberization temperature to provide about 15 micron fibers.

It was observed that glass fiber having a diameter of about 16 µm with good fibre forming properties was obtained in stable fiberization conditions from glass composition 1 when the fiber forming temperature was adjusted to about 1140°C and the winder speed was adjusted to 500 rpm. Similarly, glass fiber having a diameter of about 16 µm with good fibre forming properties was obtained in stable fiberization conditions from glass composition 2 when the fiber forming temperature was adjusted to about 1150°C and the winder speed was adjusted to 700 rpm. Glass fiber having a diameter of about 13 µm with good fibre forming properties was obtained in stable fiberization conditions from glass composition 3 when the fiber forming temperature was adjusted to about 1150°C and the winder speed was adjusted to 500 rpm.

### Example 5

Single filament tensile strength was measured from fibres of compositions 1 and 3 manufactured in example 5 according to ISO 11566:1996 which describes a method of test for the determination of the tensile properties of a single-filament specimen, taken from multifilament yarns, woven fabrics, braids and related products. The tensile strength of composition 1 was 1805+/-139 MPa. The tensile strength of composition 3 was 1843 +/- 81 MPa.

### Example 6

The formation of a calcium phosphate layer, i.e. bioactivity of the glass fibres, was studied with in vitro degradation test in simulated body fluid (SBF) at 37°C and analysed with scanning electron microscopy with energy dispersive X-ray spectroscopy (SEM/EDX) at 16 weeks' time point. The SBF was produced according to T. Kokubo, H. Takadama, "How useful is SBF in predicting in vivo bone bioactivity", Biomaterials, 27, 2907-2915 (2006). The tested glass fibres were manufactured from glass composition 3 of the invention described in Table 2.

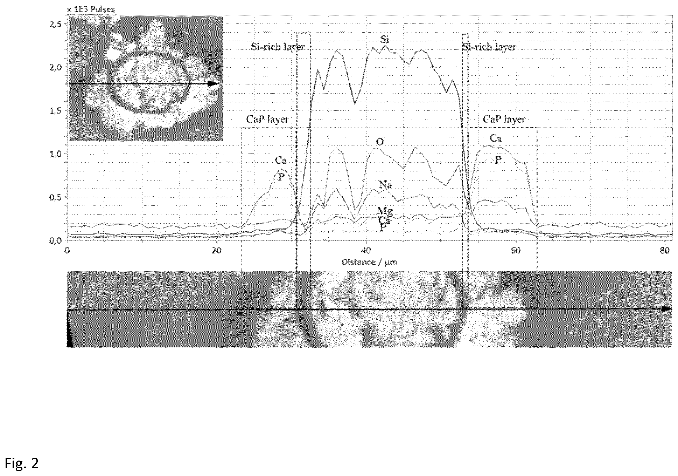

Fibers were collected from the SBF. 400 pieces of single filaments were embedded into epoxy resin and cured. After epoxy curing, the samples were cut and polished and analyzed with Hitachi TM3030: Tabletop Scanning Electron Microscope with Improved Electron-optical System. The formed calcium phosphate layer around the degrading fiber is shown in image as a white layer and verified with EDX line scan analysis. The results are shown in Figure 2.

## Claims

1. A biodegradable, bioactive and biocompatible glass composition comprising:
| | |
|---|---|
| SiO₂ | 65 - 75 wt-% |
| Na₂O | 12 - 17 wt-% |
| CaO | 8 - 11 wt-% |
| MgO | 3 - 7 wt-% |
| P₂O₅ | 0.5 - 2.5 wt-% |
| B₂O₃ | 1 - 4 wt-% |
| K₂O | >0.5 wt-% - 4 wt-% |
| SrO | 0 - 4 wt-%, and |
at most 0.3 wt-% in total of Al₂O₃ and Fe₂O₃.

2. The glass composition of claim 1, comprising
| | |
|---|---|
| SiO₂ | 65 - 75 wt-% |
| Na₂O | 12 - 17 wt-% |
| CaO | 8 - 11 wt-% |
| MgO | 4 - 6 wt-% |
| P₂O₅ | 0.5 - 2.5 wt-% |
| B₂O₃ | 1 - 4 wt-% |
| K₂O | >0.5 wt-% - 2 wt-%, and |
at most 0.3 wt-% in total of Al₂O₃ and Fe₂O₃.

3. The glass composition of claim 2 comprising
| | |
|---|---|
| SiO₂ | 66 - 70 wt-% |
| Na₂O | 12 - 15 wt-% |
| CaO | 8 - 10 wt-% |
| MgO | 5 - 6 wt-% |
| P₂O₅ | 1 - 2 wt-% |
| B₂O₃ | 2 - 3 wt-% |
| K₂O | >0.5 wt-% -1 wt-%, and |
at most 0.3 wt-% in total of Al₂O₃ and Fe₂O₃.

4. The glass composition of any one of the preceding claims, comprising less than 0.1 wt-% in total of Al₂O₃ and Fe₂O₃.

5. The glass composition of any one of the preceding claims, wherein the glass composition exhibits a working window ΔT= T_{F} - T_{L} > 150°C, wherein T_{F} is the fibre forming temperature at Log (viscosity) 3.0 dPas and T_{L} is the liquidus temperature of the glass composition, specifically >200°C, more specifically >300°C.

6. The glass composition of any one of the preceding claims, wherein the fibre forming viscosity (Log (viscosity) 3.0 dPas) of the glass composition is higher than liquidus temperature of the glass composition.

7. Glass fibre comprising the glass composition of any one of claims 1-6.

8. The glass fibre of claim 7, wherein the glass fibre is melt derived.

9. The glass fibre of claim 7 or 8, wherein the glass fibre has a tensile strength of 1.5GPa-2.5 GPa, specifically 1.8GPa-2.2GPa, more specifically 2.0GPa-2.2GPa.

10. The glass fibre of any one of claims 7 - 9, wherein the glass fibre has a modulus of 50-100 GPa, specifically 60-80 GPa, more specifically 65-75 GPa.

11. The glass fibre of any one of claims 7 - 10, wherein the glass fibre has a thickness of 35 µm or less, specifically 1µm-35µm, more specifically 5µm-30µm, even more specifically 10µm-25µm, still more specifically 10µm-20µm and even more specifically about 15 µm.

12. The glass fibre of any one of claims 7 - 11, wherein the glass fibre is chopped glass fibre having a length of less than 20mm, specifically 0.5mm-10mm, more specifically 1mm-7mm, even more specifically 3mm-7mm, still more specifically about 5 mm.

13. The glass fibre of any one of claims 7 - 11, wherein the glass fibre is continuous fibre having a length of more than 20 mm, specifically more than 30 mm, more specifically more than 40 mm, and still more specifically the glass fibre is a fully continuous fibre.

14. Use of the glass fibre of any one of claims 7 - 13 in the manufacture of articles suitable for use in medical application, such as medical devices, and in non-medical applications, such as disposable goods and durable goods.

15. The use of claim 14, wherein the glass fibre is used in an amount of more than 10%, preferably more than 40%, more preferably more than 60%, most preferably more than 90% of the total weight of the articles.

16. Article comprising the glass fibre of any one of claims 7-13.

## Patentansprüche

1. Biologisch abbaubare, bioaktive und biokompatible Glaszusammensetzung, die umfasst:
| | |
|---|---|
| SiO₂ | 65 bis 75 Gew.-% |
| Na₂O | 12 bis 17 Gew.-% |
| CaO | 8 bis 11 Gew.-% |
| MgO | 3 bis 7 Gew.-% |
| P₂O₅ | 0,5 bis 2,5 Gew.-% |
| B₂O₃ | 1 bis 4 Gew.-% |
| K₂O | > 0,5 Gew.-% bis 4 Gew.-% |
| SrO | 0 bis 4 Gew.-%, und |
insgesamt höchstens 0,3 Gew.-% Al₂O₃ und Fe₂O₃.

2. Glaszusammensetzung nach Anspruch 1, die umfasst
| | |
|---|---|
| SiO₂ | 65 bis 75 Gew.-% |
| Na₂O | 12 bis 17 Gew.-% |
| CaO | 8 bis 11 Gew.-% |
| MgO | 4 bis 6 Gew.-% |
| P₂O₅ | 0,5 bis 2,5 Gew.-% |
| B₂O₃ | 1 bis 4 Gew.-% |
| K₂O | > 0,5 Gew.-% bis 2 Gew.-%, und |
insgesamt höchstens 0,3 Gew.-% Al₂O₃ und Fe₂O₃.

3. Glaszusammensetzung nach Anspruch 2, die umfasst:
| | |
|---|---|
| SiO₂ | 66 bis 70 Gew.-% |
| Na₂O | 12 bis 15 Gew.-% |
| CaO | 8 bis 10 Gew.-% |
| MgO | 5 bis 6 Gew.-% |
| P₂O₅ | 1 bis 2 Gew.-% |
| B₂O₃ | 2 bis 3 Gew.-% |
| K₂O | > 0,5 Gew.-% bis 1 Gew.-%, und |
insgesamt höchstens 0,3 Gew.-% Al₂O₃ und Fe₂O₃.

4. Glaszusammensetzung nach einem der vorhergehenden Ansprüche, die insgesamt weniger als 0,1 Gew.-% Al₂O₃ und Fe₂O₃ umfasst.

5. Glaszusammensetzung nach einem der vorhergehenden Ansprüche, wobei die Glaszusammensetzung ein Arbeitsfenster von ΔT = T_{F} - T_{L} > 150°C aufweist, wobei T_{F} die Faserbildungstemperatur bei Log (Viskosität) 3,0 dPas ist und T_{L} die Liquidustemperatur der Glaszusammensetzung ist, insbesondere > 200°C, genauer gesagt > 300°C.

6. Glaszusammensetzung nach einem der vorhergehenden Ansprüche, wobei die Faserbildungsviskosität (Log (Viskosität) 3,0 dPas) der Glaszusammensetzung höher ist als die Liquidustemperatur der Glaszusammensetzung.

7. Glasfaser, die die Glaszusammensetzung nach einem der Ansprüche 1 bis 6 umfasst.

8. Glasfaser nach Anspruch 7, wobei die Glasfaser aus Schmelze gewonnen ist.

9. Glasfaser nach Anspruch 7 oder 8, wobei die Glasfaser eine Zugfestigkeit von 1,5 GPa bis 2,5 GPa, insbesondere 1,8 GPa bis 2,2 GPa, genauer gesagt 2,0 GPa bis 2,2 GPa, aufweist.

10. Glasfaser nach einem der Ansprüche 7 bis 9, wobei die Glasfaser ein E-Modul von 50 bis 100 GPa, insbesondere 60 bis 80 GPa, genauer gesagt 65 bis 75 GPa, aufweist.

11. Glasfaser nach einem der Ansprüche 7 bis 10, wobei die Glasfaser eine Dicke von 35 µm oder weniger, insbesondere 1 µm bis 35 µm, genauer gesagt 5 µm bis 30 µm, noch genauer gesagt 10 µm bis 25 µm, sogar noch genauer gesagt 10 µm bis 20 µm und sogar noch genauer gesagt etwa 15 µm, aufweist.

12. Glasfaser nach einem der Ansprüche 7 bis 11, wobei die Glasfaser Schnittglasfaser ist, die eine Länge von weniger als 20 mm, insbesondere 0,5 mm bis 10 mm, genauer gesagt 1 mm bis 7 mm, noch genauer gesagt 3 mm bis 7 mm, sogar noch genauer gesagt etwa 5 mm, aufweist.

13. Glasfaser nach einem der Ansprüche 7 bis 11, wobei die Glasfaser endlose Faser ist, die eine Länge von mehr als 20 mm, insbesondere mehr als 30 mm, genauer gesagt mehr als 40 mm aufweist, und die Glasfaser noch genauer gesagt eine vollständig endlose Faser ist.

14. Verwendung der Glasfaser nach einem der Ansprüche 7 bis 13 bei der Herstellung von Erzeugnissen, die sich zur Verwendung in medizinischen Anwendungen, wie beispielsweise medizinischen Vorrichtungen, und in nichtmedizinischen Anwendungen, wie beispielsweise Einweggütern und dauerhaften Gütern, eignen.

15. Verwendung nach Anspruch 14, wobei die Glasfaser in einer Menge von mehr als 10%, vorzugsweise mehr als 40%, mehr zu bevorzugen mehr als 60%, am meisten zu bevorzugen mehr als 90% des Gesamtgewichts der Erzeugnisse verwendet wird.

16. Erzeugnis, das die Glasfaser nach einem der Ansprüche 7 bis 13 umfasst.

## Revendications

1. Composition de verre biodégradable, bioactive et biocompatible, comprenant :
| | |
|---|---|
| SiO₂ | 65 à 75 % en poids |
| Na₂O | 12 à 17 % en poids |
| CaO | 8 à 11 % en poids |
| MgO | 3 à 7 % en poids |
| P₂O₅ | 0,5 à 2,5 % en poids |
| B₂O₃ | 1 à 4 % en poids |
| K₂O | plus de 0,5 % en poids à 4 % en poids |
| SrO | 0 à 4 % en poids, et |
| au plus | 0,3 % en poids au total d'Al₂O₃ et de Fe₂O₃. |

2. Composition de verre selon la revendication 1, comprenant
| | |
|---|---|
| SiO₂ | 65 à 75 % en poids |
| Na₂O | 12 à 17 % en poids |
| CaO | 8 à 11 % en poids |
| MgO | 4 à 6 % en poids |
| P₂O₅ | 0,5 à 2,5 % en poids |
| B₂O₃ | 1 à 4 % en poids |
| K₂O | plus de 0,5 % en poids à 2 % en poids, et |
| au plus | 0,3 % en poids au total d'Al₂O₃ et de Fe₂O₃. |

3. Composition de verre selon la revendication 2, comprenant
| | |
|---|---|
| SiO₂ | 66 à 70 % en poids |
| Na₂O | 12 à 15 % en poids |
| CaO | 8 à 10 % en poids |
| MgO | 5 à 6 % en poids |
| P₂O₅ | 1 à 2 % en poids |
| B₂O₃ | 2 à 3 % en poids |
| K₂O | plus de 0,5 % en poids à 1 % en poids, et |
| au plus | 0,3 % en poids au total d'Al₂O₃ et de Fe₂O₃. |

4. Composition de verre selon l'une quelconque des revendications précédentes, comprenant moins de 0,1 % en poids au total d'Al₂O₃ et de Fe₂O₃.

5. Composition de verre selon l'une quelconque des revendications précédentes, laquelle composition de verre présente une fenêtre de travail ΔT = T_{F} - T_{L} > 150 °C, où T_{F} est la température de formation de fibre à une valeur Log (viscosité) de 3,0 dPas et T_{L} est la température de liquidus de la composition de verre, spécifiquement > 200 °C, plus spécifiquement > 300 °C.

6. Composition de verre selon l'une quelconque des revendications précédentes, dans laquelle la viscosité de formation de fibre (Log (viscosité) de 3,0 dPas) de la composition de verre est supérieure à la température de liquidus de la composition de verre.

7. Fibre de verre comprenant la composition de verre de l'une quelconque des revendications 1 à 6.

8. Fibre de verre selon la revendication 7, dans laquelle la fibre de verre est issue d'une fusion.

9. Fibre de verre selon la revendication 7 ou 8, dans laquelle la fibre de verre a une résistance à la traction de 1,5 GPa à 2,5 GPa, spécifiquement de 1,8 GPa à 2,2 GPa, plus spécifiquement de 2,0 GPa à 2,2 GPa.

10. Fibre de verre selon l'une quelconque des revendications 7 à 9, dans laquelle la fibre de verre a un module de 50 à 100 GPa, spécifiquement de 60 à 80 GPa, plus spécifiquement de 65 à 75 GPa.

11. Fibre de verre selon l'une quelconque des revendications 7 à 10, dans laquelle la fibre de verre a une épaisseur de 35 µm ou moins, spécifiquement de 1 µm à 35 µm, plus spécifiquement de 5 µm à 30 µm, encore plus spécifiquement de 10 µm à 25 µm, plus spécifiquement encore de 10 µm à 20 µm, et encore plus spécifiquement d'environ 15 µm.

12. Fibre de verre selon l'une quelconque des revendications 7 à 11, dans laquelle la fibre de verre est une fibre de verranne ayant une longueur inférieure à 20 mm, spécifiquement de 0,5 mm à 10 mm, plus spécifiquement de 1 mm à 7 mm, encore plus spécifiquement de 3 mm à 7 mm, plus spécifiquement encore d'environ 5 mm.

13. Fibre de verre selon l'une quelconque des revendications 7 à 11, dans laquelle la fibre de verre est une fibre continue ayant une longueur supérieure à 20 mm, spécifiquement supérieure à 30 mm, plus spécifiquement supérieure à 40 mm, et encore plus spécifiquement la fibre de verre est une fibre complètement continue.

14. Utilisation de la fibre de verre de l'une quelconque des revendications 7 à 13 dans la fabrication d'articles utilisables dans des applications médicales, tels que des dispositifs médicaux, et dans des applications non médicales, telles que des articles jetables et des articles durables.

15. Utilisation selon la revendication 14, dans laquelle la fibre de verre est utilisée en une quantité supérieure à 10 %, de préférence supérieure à 40 %, mieux encore supérieure à 60 %, tout spécialement supérieure à 90 % du poids total des articles.

16. Article comprenant la fibre de verre de l'une quelconque des revendications 7 à 13.
